# FASCICULE DE BREVET EUROPEEN

(11) **EP 1 188 018 B1**
(45) Date de publication et mention de la délivrance du brevet: **30.10.2002**
(21) Numéro de dépôt: 00917122.4
(22) Date de dépôt: 05.04.2000
(51) Int. Cl.: F17C 13/04, F16K 1/30

(54) **PROCEDE DE CONDITIONNEMENT DE FLUIDE DANS UN RECIPIENT EQUIPE D'UN ROBINET A PRESSION POSITIVE**
VERFAHREN ZUR FÜLLUNG EINES MIT EINEM POSITIVDRUCKVENTIL AUSGERÜSTETEN BEHÄLTERS MIT FLÜSSIGKEIT
METHOD FOR CONDITIONING A LIQUID IN A RECEPTACLE FITTED WITH A POSITIVE PRESSURE VALVE

(30) Priorité: 19.04.1999 FR 9904884
(43) Date de publication de la demande: 20.03.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: GRUNDMANN, Joachim, F-93100 Montreuil (FR)
(74) Mandataire: Pittis, Olivier
(86) Numéro de dépôt international: FR0000852
(87) Numéro de publication internationale: WO00063610

(56) Documents cités:
- EP-A- 0 708 281
- US-A- 3 292 895
- US-A- 3 981 328
- US-A- 4 402 340
- US-A- 5 007 614

## Description

L'invention concerne un procédé de conditionnement d'un fluide sous pression dans un récipient de conditionnement susceptible de contenir ledit fluide, notamment une bouteille de gaz sous pression, lequel récipient est équipé d'un robinet du type à pression positive ; et son utilisation, en particulier, dans un procédé de soudage, coupage ou analogue.

Lors de la mise en oeuvre d'un procédé de soudage, notamment d'un procédé de soudage MIG (Metal Inert Gas), MIG (Metal Active Gas) ou TIG (Tungsten Inert Gas), il est d'usage de mettre en oeuvre une atmosphère gazeuse de protection aux alentours de la zone soudée pour éviter ou minimiser les contaminations du joint de soudure par des impuretés atmosphériques.

En effet, il est connu qu'en l'absence de protection gazeuse, les impuretés atmosphériques gazeuses peuvent détériorer les propriétés d'un joint de soudure.

En particulier, l'hydrogène et la vapeur d'eau peuvent engendrer des problèmes de fissuration à froid du joint de soudure.

De manière analogue, l'azote tend à dégrader les propriétés mécaniques du joint (test Charpy V) et la présence d'oxygène conduit à une baisse du niveau ductile du joint de soudure.

Toutefois, étant donné que les gaz de protection utilisés peuvent eux aussi contenir des impuretés de ce type, il est nécessaire d'utiliser en tant que gaz de protection des gaz de pureté contrôlée, c'est-à-dire des gaz contenant une teneur en impuretés inférieure à un seuil maximum déterminé au-delà duquel la qualité du joint de soudure réalisé n'est plus acceptable.

Ainsi, la norme européenne EN 439 préconise que les gaz de soudage doivent contenir une teneur en eau ou en vapeur d'eau inférieure ou égale à 40 ppm en volume (ppmv) lors de leur livraison sur le site utilisateur, c'est-à-dire au client.

Par ailleurs, des remarques analogues peuvent être formulées vis-à-vis des gaz utilisés en coupage, en particulier en coupage plasma où la qualité du gaz de coupe a une influence notable sur la durée de vie de l'électrode de la torche à plasma.

Il s'ensuit alors qu'actuellement, les conteneurs ou récipients de fluide sous pression, telles les bouteilles renfermant un gaz ou un mélange gazeux à une pression, en générale, de 150 bar à 300 bar, présentent habituellement, lors de leur livraison sur le site d'utilisation, des teneurs en impuretés, en particulier en eau ou en vapeur d'eau, tout-à-fait conformes aux seuils maximum tolérables, par exemple une teneur d'au maximum 40 ppmv en eau ou vapeur d'eau.

Toutefois, il a été constaté qu'au fur et à mesure de leur vidange, c'est-à-dire de l'utilisation du fluide qui s'y trouve, de l'eau ou de la vapeur d'eau est déposée sur les parois internes de la bouteille et, lorsque la pression régnant à l'intérieur du récipient devient inférieure à environ 70.10⁵ Pa, l'eau se trouve alors entraînée par le gaz sortant du récipient.

On assiste alors à une augmentation très nette de la teneur en vapeur d'eau dans le gaz sortant du récipient, celle-ci pouvant dépasser largement le seuil maximum tolérable, c'est-à-dire s'élever au-dessus de 40 ppmv, ainsi que montré sur la figure annexée.

On comprend immédiatement que l'augmentation de la teneur en vapeur d'eau du gaz sortant du récipient va avoir un impact négatif sur la qualité du joint de soudure réalisé, comme expliqué ci-avant.

On connaît, par ailleurs, du document US-A-4,402,340 un robinet à pression positive pour récipient de conditionnement de gaz sous pression se refermant automatiquement de manière étanche lorsque la pression dans le récipient descend en dessous d'un niveau prédéterminé. Des bouteilles de gaz équipées de ce type de robinet peuvent être stockées pendant des durées longues sans risque d'infiltration de polluants dans la bouteille. Toutefois, aucune indication permettant d'assurer un maintien de la teneur en eau ou en vapeur d'eau dans le gaz en-dessous de la limite fixée par la norme EN 439 n'est donnée par ce document.

De là, le problème qui se pose alors est de pouvoir garantir, lors de la vidange du récipient en cours d'utilisation, une teneur en vapeur d'eau du gaz sortant dudit récipient toujours inférieure au seuil maximum admissible, par exemple une teneur en vapeur d'eau d'au plus 40 ppmv, et ce, quelle que soit la pression régnant dans le récipient, c'est-à-dire y compris pour les pressions inférieures à 70.10⁵ Pa environ.

La solution apportée par la présente invention est alors un procédé de conditionnement d'un fluide, en particulier d'un gaz, dans un récipient de conditionnement susceptible de contenir le fluide sous pression, équipé d'un robinet à pression positive comportant des moyens de fermeture s'opposant à et/ou empêchant toute entrée et/ou toute sortie de fluide lorsque la pression dans la bouteille devient inférieure à une valeur de pression positive limite (PPL) déterminée, c'est-à-dire un robinet muni de moyens de fermeture, en particulier d'un clapet ou analogue, qui se ferment ou interdisent tout passage de fluide, entrant ou sortant de la bouteille, lorsque la pression dans la bouteille atteint une valeur de pression limite déterminée, par exemple une pression inférieure ou égale à 5.10⁵ Pa, ce qui permet d'empêcher le passage du gaz, donc les entrées d'impuretés atmosphériques ou d'air dans le récipient.

Selon le procédé de l'invention, on introduit dans le récipient équipé du robinet à pression positive un fluide ayant une teneur en eau ou en vapeur d'eau inférieure à 40 ppmv, l'intérieur du récipient de conditionnement ayant été soumis à un séchage, préalablement à l'introduction du fluide.

Selon le cas, le procédé de conditionnement de l'invention peut inclure l'une ou plusieurs des caractéristiques suivantes :
- le séchage est réalisé par balayage de l'intérieur de la bouteille avec un flux de gaz sec.
- on arrête le séchage lorsque la teneur en eau ou en vapeur d'eau de la bouteille est inférieure à 20 ppmv, de préférence inférieure à 5 ppmv.
- on arrête d'introduire le fluide dans le récipient lorsque la pression s'exerçant dans ledit récipient est comprise entre 100.10⁵ Pa et 400.10⁵ Pa, de préférence entre 150.10⁵ Pa et 300.10⁵ Pa.
- le fluide est un gaz choisi parmi l'argon, l'hélium, l'oxygène, le CO₂, l'azote, le CO, les oxydes d'azote (NₓO_{y}), le SO₂, le SF₆, le xénon, le néon, le krypton, l'hydrogène, CH₄, SiH₄, C₂H₄ et leurs mélanges, ou tout autre composé gazeux.
- on introduit dans le récipient un fluide à une pression comprise entre 10⁵ Pa et 300.10⁵ Pa.
- les moyens de fermeture se ferment pour une pression positive limite (PPL) supérieure à 1,5.10⁵ Pa et inférieure à 10.10⁵ Pa, de préférence inférieure ou égale à 5.10⁵ Pa.
- les moyens de fermeture comprennent un clapet et/ou un ressort.
- le fluide est sous forme liquide et/ou gazeuse.
- le récipient est choisi parmi les bouteilles en métal, en alliage métallique ou en matière composite, notamment des bouteilles réalisées en tout ou en partie en fibres de Kevlar™.

De plus, l'invention concerne aussi l'utilisation d'un récipient rempli par le procédé de conditionnement de l'invention et équipé d'un robinet du type à pression positive et contenant un fluide à une pression comprise entre 5.10⁵ Pa et 400.10⁵ Pa, dans une opération de soudage, en particulier de soudage TIG, MIG ou MAG, ou une opération de coupage plasma.

L'invention va maintenant être décrite plus en détail à l'aide d'exemples comparatifs et en références aux figures annexées, lesquels sont donnés à titre illustratif mais non limitatif.

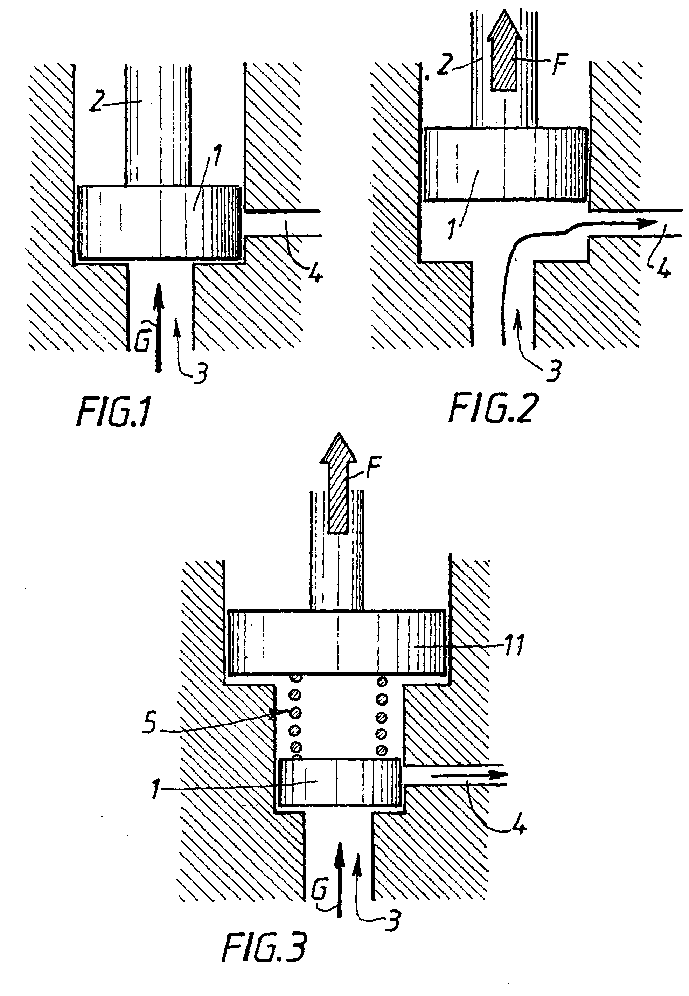

Les figures 1 à 3 schématisent le fonctionnement d'un robinet selon l'art antérieur (fig. 1 et 2) ou, le cas échéant, d'un robinet à pression positive selon l'invention (fig. 3).

Plus précisément, la figure 1 est un schéma partiel, vu en coupe longitudinale, d'un robinet de bouteille de gaz de type classique habituellement utilisé pour commander la sortie de gaz, lequel comprend un organe 2 mobile axialement sous l'effet d'un vissage ou d'un dévissage du volant de manipulation (non représenté) par l'opérateur, ledit organe 2 étant solidaire d'un clapet 1 d'obturation du passage 3 de gaz.

Comme représenté sur la figure 2, lorsque l'opérateur souhaite libérer du gaz G se trouvant dans la bouteille de gaz, il tourne le volant de manipulation du robinet dans le sens du dévissage, ce qui va provoquer un mouvement axial (selon la flèche F) ascendant de l'organe 2 et du clapet 1.

En d'autres termes, il se produit alors un décollement du clapet 3 d'obturation de son siège en libérant ainsi le gaz G, qui va gagner le passage 4 de sortie de gaz, c'est-à-dire le raccord de sortie du robinet.

Dans ce cas, si la pression dans la bouteille devient faible, par exemple lorsque la bouteille est quasiment vide, de l'air atmosphérique chargé en impuretés peut s'introduire à l'intérieur de la bouteille et, de là, venir polluer le gaz qui s'y trouve encore ou le gaz qui y sera conditionné lors du prochain remplissage de la bouteille de gaz.

Par ailleurs, la figure 3 schématise un robinet à pression positive selon l'invention, lequel est aussi vu en coupe partielle- et comprend aussi d'un clapet 1 d'obturation du passage 3 de gaz et un organe 11 mobile axialement agissant sur ledit clapet 1 pour autoriser ou interdire la sortie du gaz de la bouteille équipée de ce robinet.

Toutefois, dans ce cas, l'organe 11 mobile axialement agit sur le clapet 1, lui même mobile axialement, par l'intermédiaire d'un moyen élastique, tel un ressort 5, dont la raideur est choisie en fonction de la pression de gaz résiduel désirée dans la bouteille, c'est-à-dire la pression positive limite (PPL) souhaitée, par exemple 5 bar.

Comme on le voit sur la figure 3, un ressort 5 est positionné entre le clapet 1 et l'organe 2 et exerce ainsi une force de élastique sur ces 2 éléments, en particulier sur le clapet 1.

De là, si le robinet est ouvert et que la pression gazeuse résiduelle dans la bouteille devient inférieure à la pression résiduelle souhaitée (5 bar par exemple), donc inférieure à la force élastique ou raideur du ressort 5, le ressort va alors pousser le clapet vers le bas, c'est-à-dire vers son siège, ce qui tend à obturer le passage 3 de sortie du gaz G mais aussi et surtout à empêcher toute entrée intempestive d'air ambiant ou d'autres contaminents, telle la vapeur d'eau, à l'intérieur de la bouteille, via les passages 4 et 3.

On comprend immédiatement que, grâce à un tel robinet à pression positive, il est tout-à-fait possible de résoudre le problème de contamination du gaz contenu dans les bouteilles de gaz par des impuretés atmosphériques, telle la vapeur d'eau.

Il est à noter, par ailleurs, que le clapet 1 peut aussi être du type à mouvement horizontal, plutôt qu'axial.

### Exemples

Des essais- comparatifs ont été réalisés, d'une part, avec une bouteille de gaz équipée d'un robinet de vidange de type classique et remplie de gaz par mise en oeuvre d'un procédé de conditionnement selon l'art antérieur et, d'autre part, avec une bouteille de gaz équipée d'un robinet de vidange de type à pression positive selon l'invention et remplie selon le procédé de conditionnement de l'invention, notamment soumise à un séchage préalablement à l'introduction du gaz.

Le gaz utilisé est un mélange binaire d'argon (env. 82%) et de CO₂ (env. 18%) contenant moins de 40 ppmv de vapeur d'eau

Les essais sont réalisés pour sur des bouteilles de 150.10⁵ Pa, 200.10⁵ Pa et 300.10⁵ Pa de pression initiale, lesquelles sont progressivement vidangées et la teneur en vapeur d'eau du gaz sortant de chacune des bouteilles est constamment mesurée jusqu'à vidange totale de chaque bouteille.

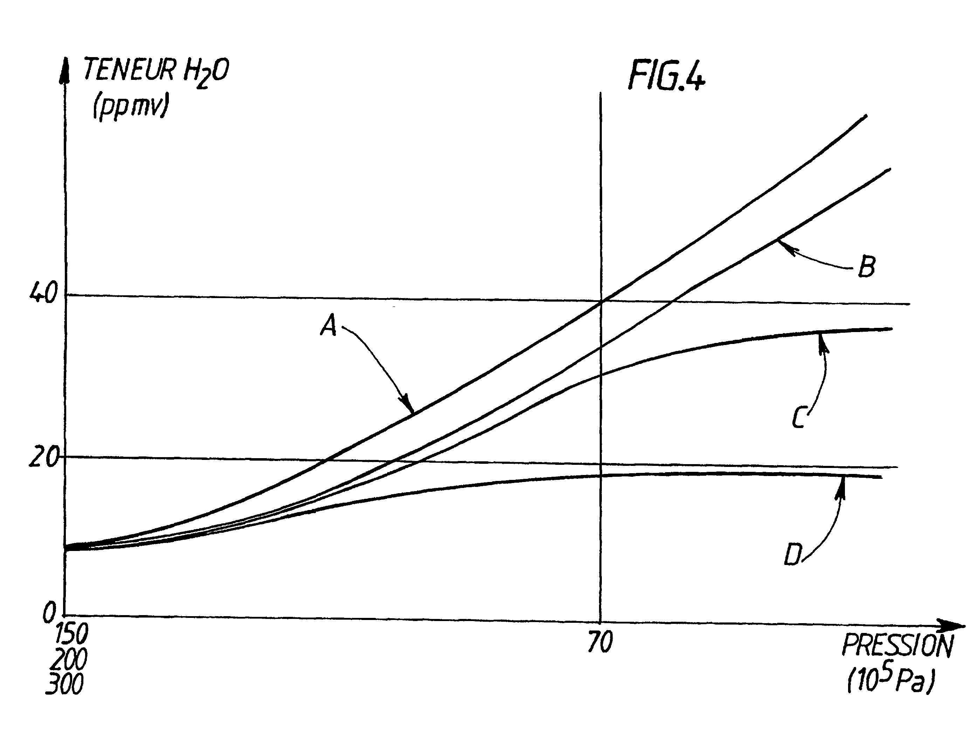

Les courbes obtenues sont représentées sur la figure 4 annexée.

Plus précisément, on voit que, pour les bouteille équipée d'un robinet de vidange de type classique, la teneur en vapeur d'eau du gaz sortant du robinet devient nettement supérieure à 40 ppmv, lorsque la pression dans la bouteille devient inférieure à environ 70.10⁵ Pa (courbes A et B) et ce, quelle que soit la pression initiale de la bouteille (150, 200 ou 300.10⁵ Pa).

En effet, pour ces bouteilles, des teneurs en vapeur d'eau de 100 ppmv à 300 ppmv ont été mesurées en fin de vidange pour une température de 15°C et une pression de 3 10⁵ Pa.

A l'inverse, de manière surprenante, les bouteilles équipées d'un robinet de vidange de type à pression positive selon l'invention permettent de garantir une teneur en vapeur d'eau du gaz sortant toujours inférieure à 40 ppmv (courbes C et D), dans les mêmes conditions de température et de pression lors des mesures.

En d'autres termes, en séchant l'intérieur d'une bouteille de gaz, en équipant cette bouteille d'un robinet à pression positive (valeur de pression limite inférieure à 5.10⁵ Pa par exemple) et en la remplissant ensuite avec du gaz ayant une teneur en vapeur d'eau inférieure à un seuil déterminé, comme préconisé par la présente invention, par exemple une teneur inférieure à 20 ppmv, on peut garantir une teneur en impuretés du gaz sortant de la bouteille toujours admissible tout au long de la vidange de la bouteille, quel que soit la pression régnant dans ladite bouteille, c'est-à-dire que la bouteille soit pleine, soit vide ou soit partiellement remplie.

De façon générale, l'utilisation d'un robinet à pression positive contribue à éviter ou minimiser les entrées intempestives de contaminents, tels la vapeur d'eau (humidité), l'oxygène et/ou l'azote, à l'intérieur de la bouteille.

Par ailleurs, des essais complémentaires ont mis en évidence qu'une bouteille selon l'invention remplie et évidée 200 fois de suite, délivre toujours un gaz ayant une teneur en vapeur d'eau inférieure à 10 ppmv (mesurée à 3 bar et 15°C), si l'on procède selon le procédé de conditionnement selon l'invention.

De plus, grâce à la présente invention, il est aussi possible d'éviter la contamination du fluide contenu dans la bouteille par d'autres impuretés atmosphériques pouvant être néfastes dans certains cas, par exemples l'azote et/ou l'oxygène lorsque le fluide de la bouteille est de l'argon et/ou de l'hélium, de l'argon et du CO₂ ou tout autre mélange gazeux.

La présente invention n'est pas limitée aux récipients de fluide destinés seulement au domaine du soudage, lequel inclus les procédés de soudage proprement-dit, et ceux de coupage, de traitement thermique, de projection thermique ou similaires, mais peut aussi être appliquée aux récipients de fluide, notamment de gaz, destinés à d'autres domaines techniques où des problèmes analogues sont susceptibles de se poser, par exemple le domaine alimentaire (contaminations bactériologique) ou le domaine médical.

## Revendications

1. Procédé de conditionnement d'un fluide dans un récipient de conditionnement destiné à contenir le fluide sous pression, ledit récipient étant équipé d'un robinet à pression positive comportant des moyens de fermeture s'opposant à et/ou empêchant toute entrée et/ou toute sortie de fluide lorsque la pression dans la bouteille devient inférieure à une valeur de pression positive limite (PPL) déterminée, **caractérisé en ce qu'**on introduit le fluide ayant une teneur en eau ou en vapeur d'eau inférieure à 40 ppm en volume dans le récipient après avoir soumis l'intérieur dudit récipient de conditionnement à un séchage.

2. Procédé selon la revendication 1, **caractérisé en ce que** les moyens de fermeture empêchent toute entrée ou, sortie de gaz du récipient pour une pression positive limite (PPL) supérieure à 1,5.10⁵ Pa et inférieure à 10.10⁵ Pa, de préférence les moyens de fermeture comprennent un clapet et/ou un moyen à ressort.

3. Procédé selon l'une des revendications 1 ou 2, **caractérisé en ce que** le moyen à ressort à une raideur équivalente à ou proportionnelle à la pression positive limite (PPL) souhaitée.

4. Procédé selon l'une des revendications 1 à 3, **caractérisé en ce qu'**il contient un fluide à une pression comprise entre 10⁵ Pa et 300.10⁵ Pa, de préférence le fluide est sous forme gazeuse et/ou **en ce qu'**il est choisi parmi les bouteilles en métal, en alliage métallique ou en matière composite.

5. Procédé de conditionnement selon la revendication 1, **caractérisé en ce que** le séchage est réalisé par balayage de l'intérieur de la bouteille avec un flux de gaz sec, de préférence un gaz sec de même composition ou de même nature que le fluide introduit subséquemment dans la bouteille.

6. Procédé de conditionnement selon l'une des revendications 1 ou 5, **caractérisé en ce que**, durant le balayage de l'intérieur de la bouteille, on suit en permanence l'évolution de la teneur en eau ou en vapeur d'eau de la bouteille.

7. Procédé de conditionnement selon la revendication 6, **caractérisé en ce qu'**on arrête le séchage lorsque la teneur en eau ou en vapeur d'eau de la bouteille est inférieure à 20 ppmv, de préférence inférieure à 5 ppmv.

8. Procédé selon l'une des revendications 5 à 7, **caractérisé en ce qu'**on arrête d'introduire le fluide dans le récipient lorsque la pression s'exerçant dans ledit récipient est comprise entre 100.10⁵ Pa et 400.10⁵ Pa, de préférence entre 150.10⁵ Pa et 300.10⁵ Pa.

9. Procédé selon l'une des revendications 5 à 8, **caractérisé en ce que** le fluide est un gaz choisi parmi l'argon, l'hélium, l'oxygène, le CO₂, l'azote, le CO, les oxydes d'azote (NₓO_{y}), le SO₂, le SF₆, le xénon, le néon, le krypton, l'hydrogène, CH₄, SiH₄, C₂H₄ et leurs mélanges.

10. Utilisation d'un récipient de conditionnement équipé d'un robinet du type à pression positive et ayant subi un remplissage par un procédé selon l'une des revendications 1 à 9, contenant un fluide à une pression comprise entre 5.10⁵ Pa et 400.10⁵ Pa, dans une opération de soudage, en particulier de soudage TIG, MIG ou MAG, ou une opération de coupage plasma.

## Claims

1. Process for filling a filling container intended to contain pressurized fluid with a fluid, the said container being fitted with a positive-pressure regulator having closure means which impede and/or prevent any inflow and/or any outflow of fluid when the pressure in the bottle falls below a specified positive pressure limit (PPL) value, **characterized in that** the fluid having a water or water-vapour content of less than 40 ppm by volume is introduced into the container after the inside of the said filling container has been subjected to a drying operation.

2. Process according to Claim 1, **characterized in that** the closure means prevent any inflow of gas into or outflow of gas from the container for a positive pressure limit (PPL) of greater than 1.5 × 10⁵ Pa and of less than 10 × 10⁵ Pa, preferably the closure means comprising a valve flap and/or a spring means.

3. Process according to either of Claims 1 and 2, **characterized in that** the spring means has a stiffness equivalent to or proportional to the desired positive pressure limit (PPL).

4. Process according to one of Claims 1 to 3, **characterized in that** it contains a fluid at a pressure of between 10⁵ Pa and 300 × 10⁵ Pa, the fluid preferably being in gaseous form, and/or **characterized in that** it is chosen from bottles made of a metal, a metal alloy or a composite.

5. Filling process according to Claim 1, **characterized in that** the drying operation is carried out by flushing the inside of the bottle with a stream of dry gas, preferably a dry gas of the same composition or of the same nature as the fluid subsequently introduced into the bottle.

6. Filling process according to either of Claims 1 and 5, **characterized in that**, while the inside of the bottle is being flushed, a change in the water or water-vapour content in the bottle is permanently monitored.

7. Filling process according to Claim 6, **characterized in that** the drying operation is stopped when the water or water-vapour content in the bottle is below 20 ppmv, preferably below 5 ppmv.

8. Process according to one of Claims 5 to 7, **characterized in that** the introduction of the fluid into the container is stopped when the pressure exerted in the said container is between 100 × 10⁵ Pa and 400 × 10⁵ Pa, preferably between 150 × 10⁵ Pa and 300 × 10⁵ Pa.

9. Process according to one of Claims 5 to 8, **characterized in that** the fluid is a gas chosen from argon, helium, oxygen, CO₂, nitrogen, CO, nitrogen oxides (NₓO_{y}), SO₂, SF₆, xenon, neon, krypton, hydrogen, CH₄, SiH₄, C₂H₄ and mixtures thereof.

10. Use of a filling container fitted with a regulator of the positive-pressure type and having been filled by a process according to one of Claims 1 to 9, containing a fluid at a pressure of between 5 × 10⁵ Pa and 400 × 10⁵ Pa, in a welding operation, particularly a TIG, MIG or MAG welding operation, or a plasma cutting operation.

## Patentansprüche

1. Verfahren zur Füllung eines zur Aufnahme des unter Druck stehenden Fluids bestimmten Aufnahmebehälters mit einem Fluid, wobei der Behälter mit einem Überdruckventil versehen ist, das Schließmittel enthält, die jeglichem Eintritt und/oder jeglichem Austritt von Fluid entgegenwirken und/oder diese verhindern, wenn der Druck in der Flasche unter einem festgelegten Grenzüberdruck fällt, **dadurch gekennzeichnet, dass** man das Fluid mit einem Wasser- oder Wasserdampfgehalt von unter 40 ppmv in den Behälter einleitet, nachdem das Innere des Füllbehälters getrocknet wurde.

2. Verfahren nach Anspruch 1, **dadurch gekennzeichnet, dass** die Schließmittel jeglichen Eintritt oder Austritt von Gas in den bzw. aus dem Behälter bei einem Grenzüberdruck von über 1,5.10⁵ Pa und unter 10.10⁵ Pa verhindern, wobei die Schließmittel vorzugsweise eine Ventilklappe und/oder ein Federmittel umfassen.

3. Verfahren nach Anspruch 1 oder 2, **dadurch gekennzeichnet, dass** das Federmittel eine Steife besitzt, die dem gewünschten Grenzüberdruck entspricht oder proportional dazu ist.

4. Verfahren nach einem der Ansprüche 1 bis 3, **dadurch gekennzeichnet, dass** der Behälter ein Fluid mit einem Druck zwischen 10⁵ Pa und 300.10⁵ Pa umfasst, wobei das Fluid vorzugsweise in Gasform vorliegt, und/oder dass er unter Flaschen aus Metall, aus einer Metalllegierung oder aus einem Verbundwerkstoff ausgewählt ist.

5. Füllverfahren nach Anspruch 1, **dadurch gekennzeichnet, dass** die Trocknung durch Spülen des Flascheninneren mit einem Trockengasstrom, vorzugsweise einem Trockengas gleicher Zusammensetzung oder Beschaffenheit wie das anschließend in die Flasche eingeleitete Fluid, erfolgt.

6. Füllverfahren nach Anspruch 1 oder 5, **dadurch gekennzeichnet, dass** man beim Spülen des Flascheninneren ständig die Entwicklung des Wasser- oder Wasserdampfgehalts der Flasche verfolgt.

7. Füllverfahren nach Anspruch 6, **dadurch gekennzeichnet, dass** man die Trocknung anhält, wenn der Wasser- oder Wasserdampfgehalt der Flasche unter 20 ppmv, vorzugsweise unter 5 ppmv, liegt.

8. Verfahren nach einem der Ansprüche 5 bis 7, **dadurch gekennzeichnet, daß** man die Einleitung des Fluids in den Behälter anhält, wenn der im Behälter herrschende Druck zwischen 100.10⁵ Pa und 400.10⁵ Pa, vorzugsweise zwischen 150.10⁵ Pa und 300.10⁵ Pa, liegt.

9. Verfahren nach einem der Ansprüche 5 bis 8, **dadurch gekennzeichnet, daß** das Fluid ein unter Argon, Helium, Sauerstoff, CO₂, Stickstoff, CO, Stickstoffoxiden (NₓO_{y}), SO₂, SF₆, Xenon, Neon, Krypton, Wasserstoff, CH₄, SiH₄, C₂H₄ und ihren Gemischen ausgewähltes Gas ist.

10. Verwendung eines mit einem Überdruckventil versehenen Füllbehälters, der durch ein Verfahren nach einem der Ansprüche 1 bis 9 gefüllt worden ist und ein Fluid unter einem Druck zwischen 5.10⁵ Pa und 400.10⁵ Pa enthält, bei einem Schweißvorgang, insbesondere WIG-, MIG- oder MAG-Schweißen, oder einem Plasmaschneidvorgang.
